# EUROPÄISCHE PATENTSCHRIFT

(11) **EP 1 119 718 B1**
(45) Veröffentlichungstag und Bekanntmachung des Hinweises auf die Patenterteilung: **18.12.2002**
(21) Anmeldenummer: 99970155.0
(22) Anmeldetag: 04.10.1999
(51) Int. Cl.: F16H 55/08, B22F 5/08

(54) **ZAHNRADPAAR MIT EINER INSBESONDERE PULVERMETALLURGISCH HERGESTELLTEN VERZAHNUNG**
GEAR PAIR WITH TOOTHING WHICH IS PRODUCED ESPECIALLY BY POWDER METALLURGY
ENGRENAGE COMPORTANT UNE DENTURE FABRIQUEE NOTAMMENT PAR METALLURGIE DES POUDRES

(30) Priorität: 06.10.1998 AT 166598
(43) Veröffentlichungstag der Anmeldung: 01.08.2001
(73) Patentinhaber: Miba Sintermetall Aktiengesellschaft, 4663 Laakirchen (AT)
(72) Erfinder: DERFLINGER, Karl, A-4663 Laakirchen (AT)
(74) Vertreter: Hübscher, Helmut, Dipl.-Ing.
(86) Internationale Anmeldenummer: AT9900233
(87) Internationale Veröffentlichungsnummer: WO00020780

(56) Entgegenhaltungen:
- US-A- 1 959 910
- US-A- 3 043 158
- US-A- 3 327 548
- US-A- 4 111 031

## Beschreibung

### Technisches Gebiet

Die Erfindung bezieht sich auf ein Zahnradpaar mit einer insbesondere pulvermetallurgisch hergestellten Verzahnung, wobei die Gegenflanken der Verzahnung eine Breitenballigkeit aufweisen.

### Stand der Technik

Um bei Zahnradpaaren die Laufgeräusche verringern und Ungenauigkeiten der Lagerung der Zahnräder ausgleichen zu können, ist es bekannt, eine Flankenlinienkorrektur der Gegenflanken der Verzahnung vorzunehmen und die Gegenflanken ballig zu schleifen oder zu schaben. Ein derartiges Zahnradpaar ist aus der US 1959910 A bekannt, die alle Merkmale des Oberbegriffs des Anspruchs 1 offenbart. Das Balligschleifen oder -schaben der Gegenflanken einer Verzahnung ist jedoch aufwendig und kann auch bei pulvermetallurgisch hergestellten Verzahnungen nicht vermieden werden, weil die im allgemeinen symmetrisch auszuführende Breitenballigkeit der Verzahnung wegen der Flankenlinienrücknahme zu beiden Zahnenden hin nicht durch eine axiales Pressen der gesinterten Zähne hergestellt werden kann.

### Darstellung der Erfindung

Der Erfindung liegt somit die Aufgabe zugrunde, ein Zahnradpaar der eingangs geschilderten Art anzugeben, dessen Verzahnung eine durch ein Ur- oder Preßformen herstellbare Breitenballigkeit aufweist, so daß beispielsweise die Vorteile einer pulvermetallurgischen Herstellung ausgenützt werden können, ohne eine aufwendige, spanabhebende Nachbearbeitung in Kauf nehmen zu müssen.

Die Erfindung löst die gestellte Aufgabe dadurch, daß die Flankenlinienrücknahmen der Zahnflanken des einen Zahnrades und der Gegenflanken des anderen Zahnrades auf gegenüberliegenden Seiten einer quer zur Zahnbreite verlaufenden Mittelebene liegen.

Da die Flankenlinienrücknahme der Zahnflanken der beiden Zahnräder einseitig erfolgt, können diese Flankenlinienrücknahmen durch ein axiales Formpressen der gesinterten Zähne hergestellt werden, so daß die Notwendigkeit einer aufwendigen, spanabhebenden Nachbearbeitung entfällt. Dies gilt selbstverständlich auch für ein Urformen, z. B. eine Herstellung der Verzahnung in einer Spritzgußtechnik. Trotzdem kann die Wirkung einer beidseitigen Breitenballigkeit der Gegenflanken sichergestellt werden, weil die Flankenlinienrücknahmen der Zahnflanken des einen Zahnrades und der Gegenflanken des anderen Zahnrades auf gegenüberliegenden Seiten einer quer zur Zahnbreite verlaufenden Mittelebene liegen. Dies bedeutet, daß im Berührungsbereich zweier im Eingriff befindlicher Zähne deren Gegenflanken einander lediglich im mittleren Bereich ihrer Flankenlinien berühren, weil im Anschluß an den Berührungsbereich jeweils die einseitig zurückgenommene Flankenlinie eines Zahnes der nicht korrigierten Flankenlinie des anderen Zahnes gegenüberliegt.

Um das Formpressen der Flankenlinienrücknahme zu erleichtern, können die einseitig zurückgenommenen Flankenlinien der Gegenflanken über eine Rundung in das stirnseitige Zahnende übergehen. Diese Rundung erleichtert außerdem die Montage.

Die einseitige Flankenlinienrücknahme erlaubt schließlich eine den jeweiligen Anforderungen entsprechende Ausbildung der Zahnflanken hinsichtlich des gewünschten Kraftübertragungsbereiches, weil das Maß der einseitigen Flankenlinienrücknahme über die Zahnhöhe unterschiedlich ausfallen kann, was durch ein Schleifen oder Schaben unter Bedingungen einer Serienfertigung kaum zu verwirklichen ist. Wegen der Einseitigkeit der Flankenlinienrücknahme ist ja lediglich ein entsprechendes Formwerkzeug herzustellen.

### Kurze Beschreibung der Zeichnung

In der Zeichnung ist der Erfindungsgegenstand beispielsweise dargestellt. Es zeigen
- Fig. 1: ein erfindungsgemäßes Zahnradpaar ausschnittsweise in einer vereinfachten Stirnansicht und
- Fig. 2: einen Schnitt entlang einer durch die Berührungslinie zweier Zähne gehenden Bezugsfläche entsprechend der Linie II-II der Fig. 1 in einem größeren Maßstab.

### Bester Weg zur Ausführung der Erfindung

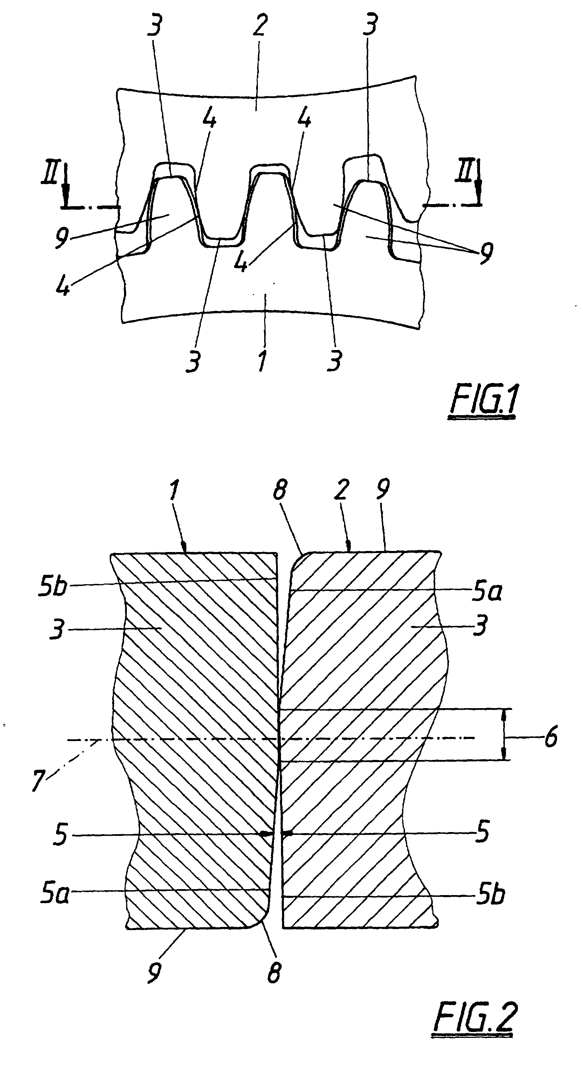

Wie der Fig. 1 entnommen werden kann, kämmen zwei Zahnräder 1 und 2 miteinander. Die Zähne 3 der pulvermetallurgisch hergestellten Verzahnung dieses Räderpaares 1, 2 bilden Gegenflanken 4, deren Flankenlinien 5, wie sie sich im Schnitt nach der Fig. 2 ergeben einseitig zurückgenommen sind. Der rückgenommene Abschnitt der Flankenlinien 5 ist mit 5a bezeichnet, während der unkorrigierte Flankenlinienbereich mit 5b bezeichnet ist. Gemäß der Fig. 2 überlappen sich die nicht korrigierten Flankenlinienbereiche 5b in einem mittleren Bereich 6, so daß die Flankenlinienrüchnahmen 5a der beiden Zahnräder 1 und 2 einander gegenüberliegen, und zwar bezüglich einer quer zur Zahnbreite verlaufenden Mittelebene 7.

Wie insbesondere der Fig. 2 unmittelbar entnommen werden kann, können die gesinteren Zähne 3 der Zahnräder 1 und 2 ohne weiteres durch ein axiales Formpressen mit einer einseitigen Flankenlinienrücknahme 5a versehen werden. Zu diesem Zweck braucht lediglich das Formwerkzeug eine der Flankenlinienrücknahme entsprechende Form aufzuweisen. Um das Formpressen zu erleichtern, kann die einseitig zurückgenommene Flankenlinie 5a über eine Rundung 8 in das stirnseitige Zahnende 9 übergehen.

Trotz der einseitigen Flankenlinienrücknahme 5a der Zähne 3 jedes Zahnrades wird die Wirkung einer durchgehenden Breitenballigkeit erreicht, weil die Flankenlinienrücknahmen 5a der beiden Zahnräder 1 und 2 auf gegenüberliegenden Seiten der Mittelebene 7 vorgesehen sind, so daß stets ein zurückgenommener Flankenlinienabschnitt 5a des einen Zahnrades 1 bzw. 2 mit einem nicht rückgenommenen Flankenabschnitt 5b des anderen Zahnrades 2 bzw. 1 zusammenwirkt.

Die Erfindung ist selbstverständlich nicht auf das dargestellte Ausführungsbeispiel beschränkt. So könnte statt der gezeichneten Geradverzahnung auch eine Schrägverzahnung mit entsprechenden einseitigen Flankenlinienrücknahmen versehen werden, um die gewünschte Breitenballigkeit sicherzustellen, ohne ein aufwendiges, spanabhebendes Nachbearbeiten der Gegenflanken in Kauf nehmen zu müssen. Außerdem könnte der Berührungsbereich 6 entsprechend den jeweiligen Belastungen unterschiedlich gewählt werden, insbesondere durch eine über die Zahnhöhe unterschiedliche Flankenlinienrücknahme, also eine über die Zahnbreite unterschiedliche Fuß- bzw. Kopfrücknahme der Zahnflanken. Außerdem muß die Verzahnung nicht zwangsläufig pulvermetallurgisch hergestellt werden. Es könnte auch ein Spritzgußverfahren zum Einsatz kommen, weil durch die einseitige Breitenballigkeit ein Entformen der Zahnräder ohne weiteres möglich ist.

## Patentansprüche

1. Zahnradpaar mit einer insbesondere pulvermetallurgisch hergestellten Verzahnung, wobei die Gegenflanken (4) der Verzahnung eine Breitenballigkeit aufweisen, wobei die Breitenballigkeit der Gegenflanken (4) aus einer einseitigen Flankenlinienrücknahme (5a) besteht **dadurch gekennzeichnet, daß** die Flankenlinienrücknahmen (5a) der Zahnflanken des einen Zahnrades (1) und der Gegenflanken (4) des anderen Zahnrades (2) auf gegenüberliegenden Seiten einer quer zur Zahnbreite verlaufenden Mittelebene (7) liegen.

2. Zahnradpaar nach Anspruch 1, **dadurch gekennzeichnet, daß** die einseitig zurückgenommenen Flankenlinien (5a) der Gegenflanken (4) über eine Rundung (8) in das stirnseitige Zahnende (9) übergehen.

3. Zahnradpaar nach Anspruch 1 oder 2, **dadurch gekennzeichnet, daß** das Maß der einseitigen Flankenlinienrücknahme (5a) über die Zahnhöhe unterschiedlich ist.

## Claims

1. A pair of gearwheels with a toothing made more particularly by powder metallurgy, the co-acting flanks of the toothing having a widthwise crown, the widthwise crown of the co-acting flanks (4) consisting of a unilateral flank line relief (5a), **characterised in that** the flank line reliefs (5a) of the flanks of one gearwheel (1) and of the co-acting flanks (4) of the other gearwheel (2) are situated on opposite sides of a central plane (7) extending transversely of the tooth width.

2. A pair of gearwheels according to claim 1, **characterised in that** the unilaterally relieved flank lines (5a) of the co-acting flanks (4) merge into the tooth end face (9) via a curvature (8).

3. A pair of gearwheels according to claim 1 or 2, **characterised in that** the dimension of the unilateral flank line relief (5a) varies over the tooth height.

## Revendications

1. Engrenage comportant une denture fabriquée notamment par métallurgie des poudres, les contre-flancs (4) de la denture présentant un bombement en direction de la largeur, le bombement en direction de la largeur des contre-flancs (4) étant formé d'un retrait de la ligne de flanc (5a) sur un côté, **caractérisé en ce que** les retraits de la ligne de flanc (5a) des flancs de dent d'une roue dentée (1) et des contre-flancs (4) de l'autre roue dentée (2) sont situés sur des côtés opposés d'un plan médian (7) s'étendant transversalement par rapport à la largeur de dent.

2. Engrenage selon la revendication 1, **caractérisé en ce que** les lignes de flanc (5a) en retrait des contre-flancs (4) se transforment, par l'intermédiaire d'un arrondi (8), en l'extrémité de dent (9) située côté frontal.

3. Engrenage selon la revendication 1 ou 2, **caractérisé en ce que** l'ampleur du retrait de la ligne de flanc (5a) sur un côté est différent, selon la position en hauteur dans la dent.
